# EUROPEAN PATENT APPLICATION

(11) **EP 1 130 886 A2**
(43) Date of publication of application: **05.09.2001**
(21) Application number: 01104810.5
(22) Date of filing: 27.02.2001
(51) Int. Cl.: H04M 1/247

(54) **Screen setting method in portable telephone and portable telephone using the same**

(30) Priority: 29.02.2000 JP 2000054919; 29.02.2000 JP 2000054923
(71) Applicant: Matsushita Electric Industrial Co., Ltd., Kadoma-shi, Osaka (JP)
(72) Inventor: Ishigaki, Junji, Hachioji-shi, Tokyo (JP)
(74) Representative: Grünecker, Kinkeldey, Stockmair & Schwanhäusser Anwaltssozietät

(57) **Abstract**

An icon screen "SCREEN" is selected (step 61). Next, a determination key of a navigation key is pressed, whereby a screen listing screen is displayed (step 62). Next, whether or not the user selects "SCREEN SELECITION" to change one screen to another is determined (step 63). If the user selects "SCREEN SELECITION", registered screens are listed by category (step 64). The current screen is replaced with a user's favorite category screen (step 65). If the user does not select "SCREEN SELECITION" at step 63, the current screen is continued (step 66).

## Description

### DETAILED DESCRIPTION OF THE INVENTION

This invention relates to a screen setting method in a portable telephone and a portable telephone using the screen setting method and in particular to an art for making it possible for the user to select an arbitrary screen from among a plurality of screens for screen change. Additionally, this invention relates to a composite screen setting method in a portable telephone having a non-voice information communication mode (for example, i mode) function and a portable telephone using the composite screen setting method and in particular to an art for making it possible to select a foreground screen and a background screen by the user and superpose the foreground and background screens on each other for display as a composite screen. The non-voice information communication mode refers to an operation mode of online data service using a digital portable telephone. This mode enables the user to use connection service to sites (programs) registered in the center, Internet connection service, message service, i mode service, etc.

Hitherto, in a portable telephone that can provide a screen on a display section, the pattern of the screen has been default (fixed), and the user gets tired of the screen pattern which is too monotonous; this is a problem.

### SUMMARY OF THE INVENTION

It is therefore an object of the invention to provide a screen setting method in a portable telephone for enabling the user to select an arbitrary screen from among a plurality of screens for screen change and a portable telephone using the screen setting method.

Another object of the invention is to provide a composite screen setting method in a portable telephone for making it possible to select a foreground screen and a background screen from among a plurality of screens by the user and superpose the foreground and background screens on each other for display as a composite screen and a portable telephone using the composite screen setting method.

According to the first aspect of the invention, there is provided, in a portable telephone capable of displaying a screen on a display section, a screen setting method characterized by that an arbitrary screen displayed on the display section can be set as a screen in an arbitrary display mode. According to the configuration, the user can set a screen as a screen in an arbitrary display mode.

Preferably, in the screen setting method, the arbitrary screen displayed on the display section may be a screen selected and displayed from among a plurality of screens displayed in sequence. According to the configuration, a user's favorite illustration can be displayed as a screen.

Further, in the screen setting method, the arbitrary screen displayed on the display section may be an illustration down loaded from a site. According to the configuration, a user's favorite illustration can be set as a screen.

Further, in the screen setting method, the arbitrary screen displayed on the display section may be an animation down loaded from a site. According to the configuration, a user's favorite animation can be set as a screen.

Further, in the screen setting method, the animation may be an image in a GIF. According to the configuration, if an animation screen is read, the degree of burdening the memory of the portable telephone can be reduced.

Further, in the screen setting method, the screen in the arbitrary display mode may be a screen in a standby mode. According to the configuration, a user' s favorite standby screen can be set.

Further, in the screen setting method, the screen in the arbitrary display mode may be a wake-up screen when power is turned on. According to the configuration, a user's favorite wake-up screen when the power is turned on can be set.

Moreover, there is provided a portable telephone wherein a screen in any desired display mode can be set using a screen setting method as mentioned above. According to the configuration, a portable telephone for enabling the user to set his or her favorite screen can be provided.

According to the second aspect of the invention, there is provided, in a portable telephone for enabling the user to select a screen to be displayed in a standby mode, a composite screen setting method characterized by that a screen selection mode is set and a foreground screen and a background screen can be selected from among a plurality of screens and can be superposed on each other for display as a composite screen. According to the configuration, the user can select the foreground screen and the background screen from among a plurality of screens and thus can set a screen of which the user does not get tired.

Preferably, in the composite screen setting method, the background screen is image data down loaded from a site or a URL and the foreground screen is previously stored image data. According to the configuration, the user can display his or her favorite background screen as a screen.

Preferably, in the composite screen setting method, the background screen is previously stored image data and the foreground screen is image data down loaded from a site or a URL. According to the configuration, the user can display his or her favorite foreground screen as a screen.

Further, in the composite screen setting method, the image data may be in a GIF. According to the configuration, read image data can be used as a screen so as not to burden image memory.

Further, in the composite screen setting method, to display the image data of the background screen, the degradation of the image data may be lowered one level of gradation. According to the configuration, the foreground screen can be viewed more easily.

Preferably, in the composite screen setting method, to display the image data of the background screen, at least any one or more of a distant-range view area, a middle-range view area, and a close-range view area are provided in screen and any desired image is selected for each area for setting a composite screen. According to the configuration, the user can set different screens in the distant-range view area, the middle-range view area, and the close-range view area and thus can set a screen of which the user does not get tired.

Moreover, there is provided a portable telephone wherein a foreground screen and a background screen can be selected and can be superposed on each other for display as a composite screen using a composite screen setting method as mentioned above. According to the configuration, different types of screens are displayed, so that a portable telephone whose user does not get tired of various screens to view can be provided.

### BRIEF DESCRIPTION OF THE DRAWINGS

FIG . 1 is a front view to show the configuration of a portable telephone according to an embodiment of the invention;
FIG. 2 is a block diagram of circuitry for realizing the portable telephone in FIG. 1;
FIG. 3 shows an example of an icon screen displayed in a standby mode on a display of the portable telephone in FIG. 1;
FIGS. 4A to 4G are drawings to show the display screen transition of the portable telephone to describe the embodiment of the invention;
FIGS. 5A to 5D are other drawing to show the display screen transition of the portable telephone to describe the embodiment of the invention;
FIG. 6 is a flowchart of a first embodiment to describe the processing operation performed when the user wants to change a screen to another;
FIG. 7 is a flowchart of a second embodiment to describe the processing operation performed when the user wants to change a screen to another;
FIGS. 8A to 8F are drawings to show the display screen transition of the portable telephone to describe the embodiment of the invention; and
FIG. 9 is a flowchart to describe the operation for making it possible to set a screen selection mode and combine a foreground screen and a background screen from among a plurality of screens into a screen for display.

### DETAILED DESCRIPTION OF THE PREFERRED EMBODIMENTS

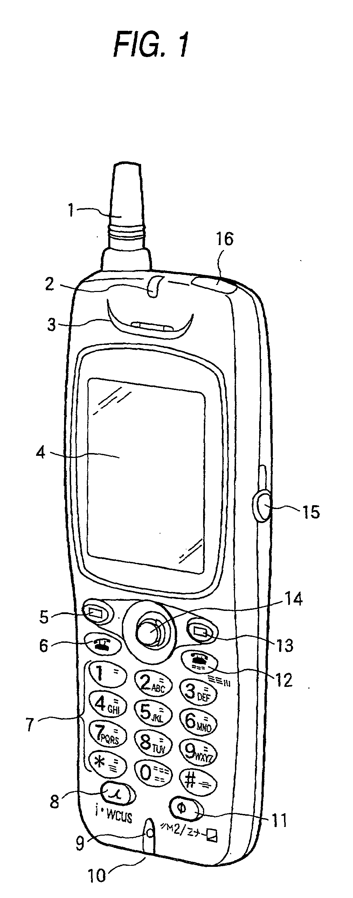

Referring now to the accompanying drawings (FIGS. 1 to 9), there are shown preferred embodiments of the invention.

FIG. 1 is a schematic drawing to show the configuration of a portable telephone comprising a non-voice information communication mode (for example, information mode so called i-mode) function according to an embodiment of the invention. In FIG. 1, the portable telephone according to the embodiment of the invention comprises an antenna 1, an incoming call/charge lamp 2, a receiver 3, a liquid crystal display 4, a left soft key 5 also serving as a telephone directory button, a conversation start button 6, numeric keypad or dial keys 7, a warp key 8 for switching to a non-voice information communication mode, a transmitter 9, an external connection terminal 10, a voice/manner key 11, a power/quit/hold key 12, a right soft key 13 also serving as a redial/clear button, a navigation key 14 also serving as a scroll function for enabling the user to select display up and down and from side to side and determine the selection by pressing a center button, an earphone microphone terminal 15, and an infrared port 16.

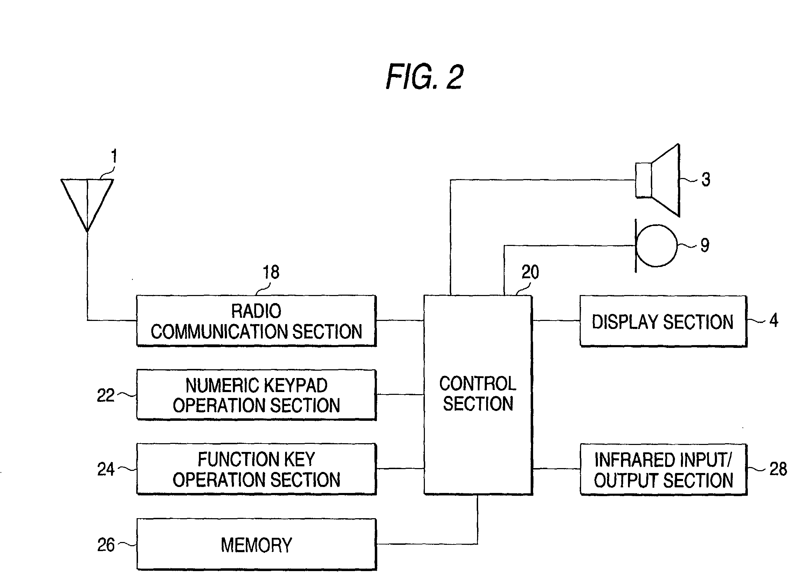

FIG. 2 is a block diagram of circuitry for realizing the described portable telephone. In FIG. 2, in the portable telephone, a radio wave received at the antenna 1 is received in a reception section (not shown) of a radio communication section 18 and reception information is sent to a control section 20, which then displays the reception information of the telephone number of the calling party, etc., on the display section 4 such as a liquid crystal display.

The control section 20 converts the reception information into voice information and outputs voice through the speaker (receiver) 3 of reception section. User's voice is received through the transmitter (microphone) 9 and is sent to the control section 20 and is radio-transmitted to the communicating party from a transmission section (not shown) of the radio communication section 18 and the antenna 1. The control section 20 stores voice information of the conversation contents during the conversation, etc., in memory 26 or reads stored information in the memory 26. As the numeric keypad 7 is operated, a numeric keypad operation section 22 inputs a dial signal, etc., to the control section 20. As any function key, for example, the navigation key 14 is operated, a function key operation section 24 inputs the key operation to the control section 20.

Still image data or moving image data of a screen can be previously stored in the memory 26 and image data of illustration or animation down loaded using the non-voice information communication mode can be stored in the memory 26. The control section 20 enables the user to select and determine any screen by operating the navigation key 14 of the function key operation section 24 when the user views the screen displayed on the display section 4 in a setting operation mode of a standby screen or a wake-up screen when the power is turned on. An infrared input/output section 28 transfers infrared signals via an infrared port 16. The circuitry is housed in a cabinet in FIG. 1.

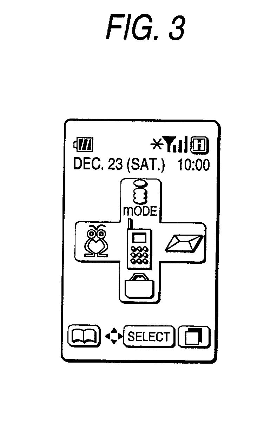

FIG. 3 shows an example of an icon screen displayed in a standby mode on the display section 4 of the described portable telephone. In the example, the icon screen is displayed in the shape of a cross, and an i-mode main icon, an i-mode mail icon, a telephone directory icon, and a screen icon are displayed clockwise from the top to the bottom, and a menu icon is displayed at the center. Any selected icon screen is displayed on an enlarged scale, indicating that which icon screen is displayed at present.

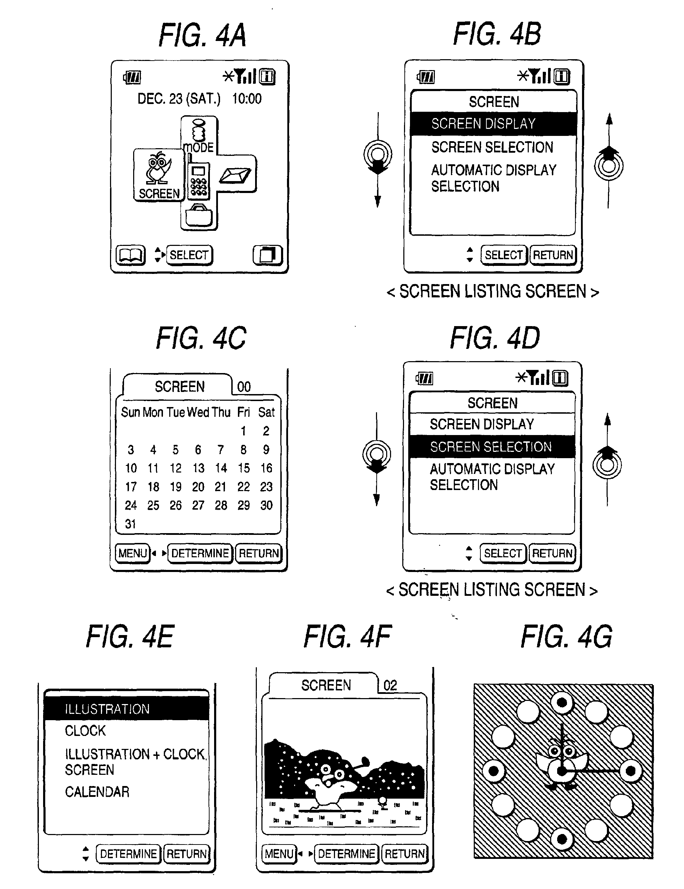

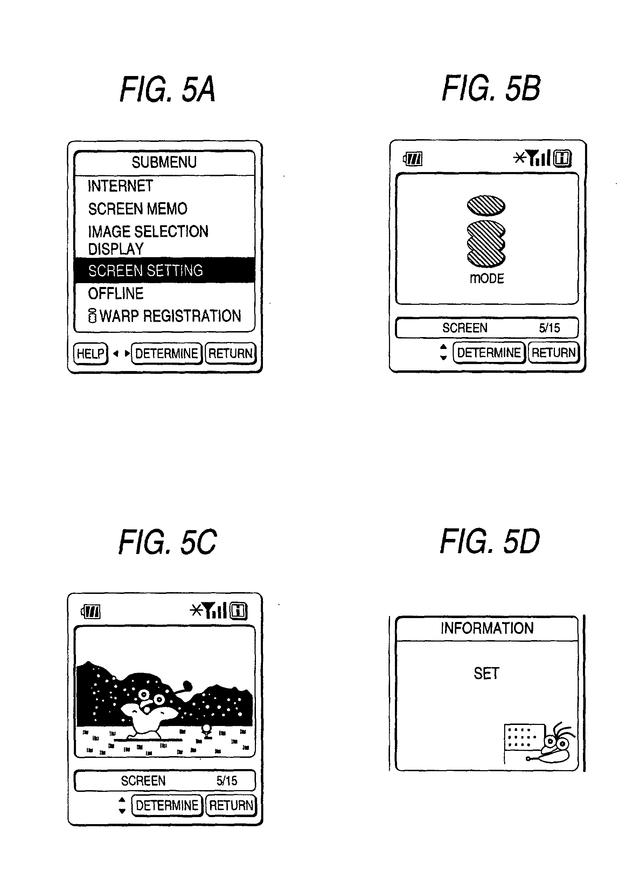

FIGS. 4 and 5 show the display screen transition of the portable telephone to describe the embodiment of the invention. If the power key 12 is operated, the portable telephone having the non-voice information communication mode (for example, i-mode) function according to the embodiment of the invention enters a standby mode and displays the five icons as shown in FIG. 3 on the display section 4.

If the user selects the icon screen "SCREEN" in the mode, the selected icon is scaled up on the display as shown in FIG. 4A. The user can display a screen listing screen by pressing the determination key of the navigation key 14.

Next, the user operates the up or down scroll key of the navigation key 14 to select a function. FIG. 4B indicates that "SCREEN DISPLAY" highlighted is selected as the function, and a "CALENDAR" as in FIG. 4C selected as the current screen is displayed as the screen.

If the user wants to change the current displayed and selected screen, for example, the above-mentioned "CALENDAR" to any other screen, the user selects the function "SCREEN SELECTION" on the same screen in FIG. 4D as the screen in FIG. 4B.

When the user selects the function "SCREEN SELECTION", the registered screens are listed by category, as shown in FIG. 4E. Here, highlighted "ILLUSTRATION" is selected. The user can use the navigation key 14 of the function key operation section 24 to scroll the screen listing screen for moving the highlight position to "CLOCK", "ILLUSTRATION + CLOCK", or "CALENDAR" scroll to select the function. A registration number is also set in "ILLUSTRATION". If the user selects "ILLUSTRATION" with the registration No. 2 like the top but two in FIG. 4E and selects it as a screen, then the registration No. 2 of "ILLUSTRATION" in the category can be displayed as the screen in the standby mode. On the other hand, when the user operates the navigation key 14 of the function key operation section 24 with "ILLUSTRATION" displayed, the "ILLUSTRATION" display state in FIG. 4F is changed to a screen of "ILLUSTRATION + CLOCK" in FIG. 4G and next changed to the "CALENDAR" screen in FIG. 4C. In doing so, the screens not viewed in 4E can be scrolled in order and if a favorite screen is encountered, the screen can be selected and determined when it is displayed.

In the invention, when an image in a GIF (Graphics Interchange Format) at a displayed site or previously stored in screen memo exists on a screen, it can be registered as an ILLUSTRATION screen and further if an animation in the GIF appears at a displayed site, it can also be set and used as a screen. This function will be discussed below:

If the user presses the left soft key 5 when a site is displayed, a submenu screen as in FIG. 5A is displayed. Then, the user selects highlighted "SCREEN SETTING". To set from "SCREEN MEMO", the user displays the screen memo to be set and presses the left soft key 5 to select "SCREEN SETTING".

If the user presses the determination key of the navigation key 14 to confirm selection of "SCREEN SETTING", an image registration screen appears. If an already registered image exists, it is displayed. FIG. 5B shows an example of displaying an already registered image.

The user presses the left or right scroll key of the navigation key 14 to change to a registration screen, selects an illustration or an animation which may be overwritten as in FIG. 5C, and overwrites the illustration or the animation with a new one to be registered.

Last, when the user presses the determination key of the navigation key 14, a setting completion screen appears as in FIG. 5D. After this, the newly setup illustration or animation can be displayed as a screen.

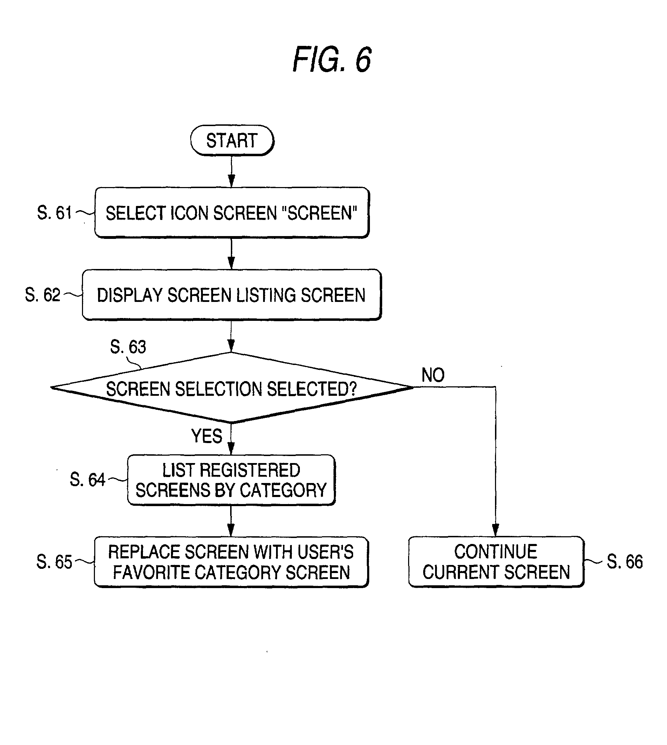

FIG. 6 is a flowchart of a first embodiment to describe the processing operation performed when the user wants to change the screen to another.

In FIG. 6, the icon screen "SCREEN" is selected (step 61). Next, the determination key of the navigation key 14 is pressed, whereby the screen listing screen is displayed (step 62).

Next, whether or not the user selects "SCREEN SELECTION" to change the screen to another is determined (step 63). If "SCREEN SELECTION" is selected, the registered screens are listed by category (step 64). The screen is replaced with the user's favorite category screen (step 65). If "SCREEN SELECTION" is not selected at step 63, the current screen is continued (step 66).

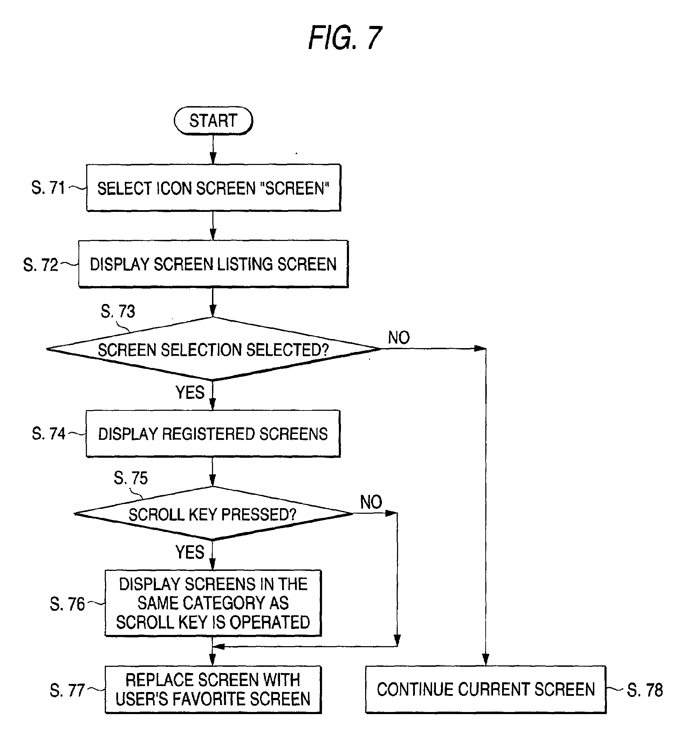

FIG. 7 is a flowchart of a second embodiment to describe the processing operation performed when the user wants to change the screen to another. In the embodiment, when the user selects "SCREEN SELECTION", listing the registered screens as shown at step 64 in FIG. 6 is not performed and the current setup screen is displayed instead of listing the registered screens.

That is, in the flowchart of FIG. 7, the icon screen "SCREEN" is selected (step 71). Next, the determination key of the navigation key 14 is pressed, whereby the screen listing screen is displayed (step 72).

Next, whether or not the user selects "SCREEN SELECTION" to change the screen to another is determined (step 73). If "SCREEN SELECTION" is selected, the current setup screen is displayed (step 74). Then, if the scroll key of the navigation key 14 is pressed for the scroll operation (step 75), another screen is displayed as the scroll key is operated (step 76).

When the screen is displayed, the determination key of the navigation key 14 is pressed, whereby the screen is replaced with the user's favorite screen (step 77). If"SCREEN SELECTION" is not selected at step 73, the current screen is continued (step 78) as in the flowchart of FIG. 6.

Since the operation modes for displaying a screen on the display section 4 include the standby mode and the wake-up mode, the screen to be displayed for each type of display operation can also be set as desired.

As described above, according to the invention, there is provided, in a portable telephone capable of displaying a screen on a display section, a screen setting method characterized by that an arbitrary screen displayed on the display section can be set as a screen in an arbitrary display mode. According to the configuration, the user can set a screen as a screen in an arbitrary display mode.

Further, in the screen setting method, the arbitrary screen displayed on the display section may be a screen selected and displayed from among a plurality of screens displayed in sequence . According to the configuration, the screen setting method has the advantage that a user's favorite illustration can be displayed as a screen.

Further, in the screen setting method, the arbitrary screen displayed on the display section may be an illustration down loaded from a site. According to the configuration, the screen setting method has the advantage that a user's favorite illustration can be set as a screen.

Further, in the screen setting method, the arbitrary screen displayed on the display section may be an animation down loaded from a site. According to the configuration, the screen setting method has the advantage that a user's favorite animation can be set as a screen.

Further, in the screen setting method, the animation is an image in the GIF. According to the configuration, the screen setting method has the advantage that if an animation screen is read, the degree of burdening the memory of the portable telephone can be reduced.

Further, the screen in the arbitrary display mode is a screen in a standby mode. According to the configuration, the screen setting method has the advantage that a user's favorite standby screen can be set.

Further, in the screen setting method, the screen in the arbitrary display mode is a wake-up screen when power is turned on. According to the configuration, the screen setting method has the advantage that a user's favorite wake-up screen when the power is turned on can be set.

Furthermore, there is provided a portable telephone wherein a screen in any desired display mode can be set using a screen setting method. According to the configuration, a portable telephone for enabling the user to set his or her favorite screen can be provided.

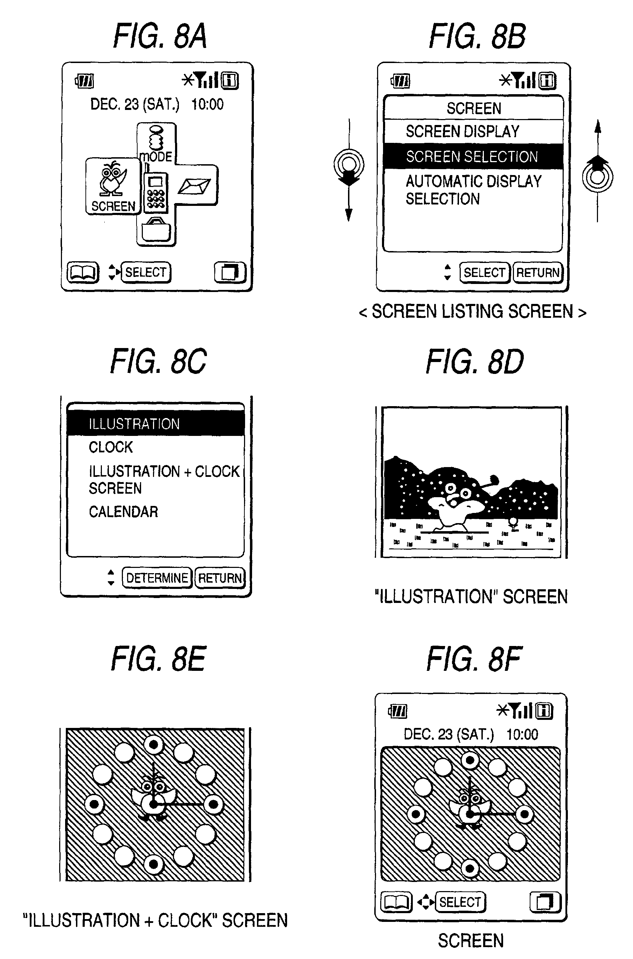

Referring now to FIGS. 8 to 9, another embodiment of the invention will be described.

Previously registered screen data or image data down loaded from a site or URL is stored in the memory 26. If the user selects a foreground screen and a background screen from among a plurality of screens by operating the function key operation section 24 or the numeric keypad operation section 22 in a screen selection mode, the control section 20 can display the foreground and background screens as a composite screen. The circuitry is housed in a cabinet in FIG. 1.

FIGS. 8A to 8F show the display screen transition of the portable telephone to describe the embodiment of the invention. The power key 12 is operated and the portable telephone having the non-voice information communication mode (for example, i-mode) function is placed in a stand by mode. If the user selects "SCREEN" out of the icon screen in the standby mode, the selected icon is scaled up on the display as shown in FIG. 8A. If the user presses the determination key of the navigation key 14, a screen listing screen is displayed as in FIG. 8B. Further, the user presses the up or down scroll key of the navigation key 14 to select "SCREEN SELECTION" andpresses the determination key of the navigation key 14 to determine the function selection of "SCREEN SELECTION". In doing so, the screens that can be selected are displayed by category as in FIG. 8C.

If the user selects the "ILLUSTRATION" image data in the category, an "ILLUSTRATION" screen, for example, as shown in FIG. 8D is displayed as the screen. If the user selects the "ILLUSTRATION + CLOCK" image data in the category, an "ILLUSTRATION + CLOCK" screen, for example, as shown in FIG. 8E is displayed as the screen.

If the user selects the "ILLUSTRATION + CLOCK" image data in the category as the screen, the "ILLUSTRATION" image data becomes a background screen, the "CLOCK" image data becomes a foreground screen, and a plurality of screens as in FIG. 8F are superposed on each other, namely, a composite screen displayed.

In this case, to make the foreground screen image data conspicuous, the gradation of the background screen image data is lowered one level of the gradation and the foreground screen image data and the background screen image data are superposed on each other for display; further, the foreground screen image data and the background screen image data can be selected from among different types of image data.

Acquisition of the image data is not covered in the description given above; previously stored image data may be used and image data downloaded from a site or a URL (Uniform Resource Locator) may be used.

An image in a GIF (Graphics Interchange Format) is used as the image data that can be downloaded from a site or a URL, because large-capacity memory cannot be used as image memory in a small-sized, lightweight information terminal of a portable telephone.

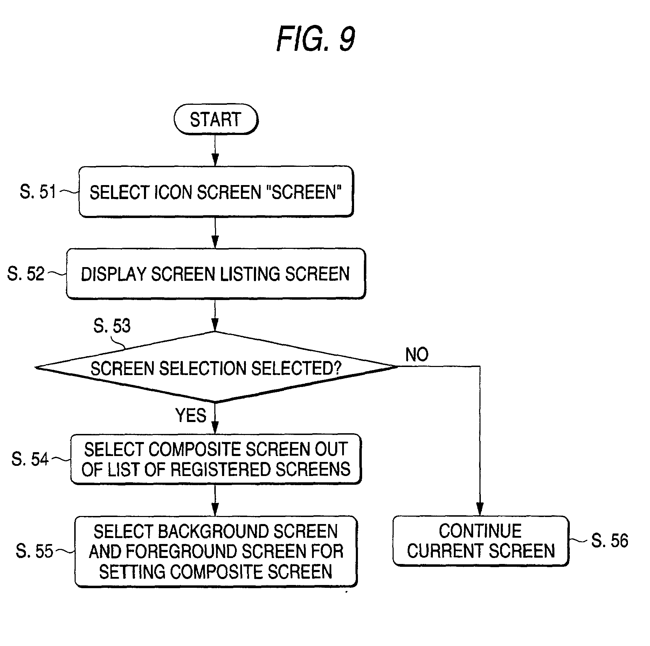

FIG. 9 is a flowchart to describe the operation for setting the above-mentioned composite screen.

In FIG. 5, the icon screen "SCREEN" is selected (step 51). Next, the determination key of the navigation key 14 is pressed, whereby the screen listing screen is displayed (step 52).

Next, whether or not the user selects "SCREEN SELECTION" to change the screen to a composite screen is determined (step 53). If "SCREEN SELECTION" is selected, composite screen, for example, "CLOCK + ILLUSTRATION" image data is selected out of a list of the registered screens (step 54). "ILLUSTRATION" image data is selected for a background screen and CLOCK image data is selected for a foreground screen for setting a composite screen (step 55). If "SCREEN SELECTION" is not selected at step 53, the current screen is continued (step 56).

In the described embodiment, an example of setting a composite screen with a plurality of images superposed on each other as a foreground and a background is shown; however, the display area of the display section 4 may be previously divided into, for example, a distant-range view area, a middle-range view area, and a close-range view area, and any desired image may be placed in each area.

As described above, according to the invention, there is provided, in a portable telephone for enabling the user to select a screen to be displayed in a standby mode, a composite screen setting method characterized by that a screen selection mode is set and a foreground screen and a background screen can be combined into a composite screen for display from among a plurality of screens. According to the configuration, the user can select the foreground screen and the background screen from among a plurality of screens and thus can set a screen of which the user does not get tired.

Further, in the composite screen setting method, the background screen may be image data down loaded from a site or a URL and the foreground screen is previously stored image data. According to the configuration, the composite screen setting method has the advantage that the user can display his or her favorite background screen as a screen.

Further, in the composite screen setting method, the background screen may be previously stored image data and the foreground screen is image data down loaded from a site or a URL. According to the configuration, the composite screen setting method has the advantage that the user can display his or her favorite foreground screen as a screen.

Further, in the composite screen setting, the image data may be in a GIF. According to the configuration, the composite screen setting method has the advantage that read image data can be used as a screen so as not to burden image memory.

Further, in the composite screen setting method, to display the image data of the background screen, the degradation of the image data is lowered one level. According to the configuration, the composite screen setting method has the advantage that the foreground screen can be viewed more easily.

Further, in the composite screen setting method, to display the image data of the background screen, at least any one or more of a distant-range view area, a middle-range view area, and a close-range view area are provided in screen and any desired image is selected for each area for setting a composite screen. According to the configuration, the composite screen setting method has the advantage that the user can set different screens in the distant-range view area, the middle-range view area, and the close-range view area and thus can set a screen of which the user does not get tired.

Furthermore, there is provided a portable telephone wherein a foreground screen and a background screen can be selected and can be superposed on each other for display as a composite screen using a composite screen setting method as claimed in any of claims 1 to 6. According to the configuration, different types of screens are displayed, so that a portable telephone whose user does not get tired of various screens to view can be provided.

## Claims

1. A screen setting method for a portable telephone capable of displaying a screen on a display section, comprising the steps of:
displaying an arbitrary screen on the display section; and
setting the screen on the display section as a screen in an arbitrary display mode.

2. The screen setting method as claimed in claim 1, wherein the arbitrary screen displayed on the display section is a screen selected and displayed from among a plurality of screens displayed in sequence.

3. The screen setting method as claimed in claim 1, wherein the arbitrary screen displayed on the display section is an illustration down loaded from a site.

4. The screen setting method as claimed in claim 1, wherein the arbitrary screen displayed on the display section is an animation down loaded from a site.

5. The screen setting method as claimed in claim 4, wherein the animation is an image in graphic interchange format.

6. The screen setting method as claimed of claim 1, wherein the screen in the arbitrary display mode is a screen in a standby mode.

7. The screen setting method as claimed of claim 1, wherein the screen in the arbitrary display mode is a wake-up screen when power is turned on.

8. A portable telephone wherein a screen in any desired display mode can be set using a screen setting method as claimed in aclaim 1.

9. A composite screen setting method for a portable telephone for enabling a user to select a screen to be displayed in a standby mode, the method comprising the steps of:
setting an operation into a screen selection mode;
selecting a foreground screen and a background screen from among a plurality of screens;
superposing each other for display as a composite screen.

10. The composite screen setting method as claimed in claim 9, wherein the background screen is image data down loaded from a site or a URL and the foreground screen is previously stored image data.

11. The composite screen setting method as claimed in claim 9, wherein the background screen is previously stored image data and the foreground screen is image data down loaded from a site or a URL.

12. The composite screen setting method as claimed in claim 10, wherein the image data is in graphic interchange format.

13. The composite screen setting method as claimed in claim 10, wherein to display the image data of the background screen, the degradation of the image data is lowered one level.

14. The composite screen setting method as claimed in claim 9, wherein to display the image data of the background screen, at least any one or more of a distant-range view area, a middle-range view area, and a close-range view area are provided in screen and any desired image is selected for each area for setting a composite screen.

15. A portable telephone wherein a foreground screen and a background screen can be selected and can be superposed on each other for display as a composite screen using a composite screen setting method as claimed in claim 9.
